# EUROPEAN PATENT SPECIFICATION

(11) **EP 0 629 468 B1**
(45) Date of publication and mention of the grant of the patent: **25.11.1998**
(21) Application number: 94304310.9
(22) Date of filing: 15.06.1994
(51) Int. Cl.: B23K 37/04

(54) **Welding method**
Schweissverfahren
Procédé de soudage

(30) Priority: 17.06.1993 FI 932780
(43) Date of publication of application: 21.12.1994
(73) Proprietor: KVAERNER MASA-YARDS OY, 00150 Helsinki (FI)
(72) Inventor: Gustafsson, Jukka, SF-23100 Mynämäki (FI); Heino, Kalevi, SF-20110 Turku (FI)
(74) Representative: Newby, John Ross

(56) References cited:
- DE-A- 2 439 669
- FR-A- 1 467 543
- US-A- 3 197 604
- US-A- 4 075 453
- US-A- 4 550 244

## Description

The invention relates to a method according to the preamble of claim 1 for the mass production welding together of extremely long metal plates and to bodies produced from such plates welded together by the method.

In the shipbuilding industry large numbers of plates are welded together to form assemblies such as ship's decks, hulls and the like. Because the assemblies to be manufactured have an extremely large area, it is economically desirable to work with as large plate blanks as possible and the term "extremely long metal plates" should be taken to mean plates with a length of at least 10 metres (or the maximum length commercially available should plate manufacturers not have longer material available). A typical plate blank used in the shipbuilding industry is over 10 metres long, often close to 20 metres long. The joining of plate blanks of these sizes to one another by welding is demanding work, because the high temperatures generated by the welding cause deformations in the plate blanks during the welding operation itself and/or after the welding operation when, for example, welding shrinkage causes unevenness in the plate blanks, the elimination of which by, for example, the flame straightening method is both difficult and time-consuming.

Further, traditional preparatory actions for joining extremely long plates together by welding are difficult, require a lot of space and are time-consuming. Traditionally, a small gap is left between plates to be welded together to make it possible to carry out the entire welding phase from one side only of the plates. The forming of the gap requires exact positioning of the plates with respect to each other, to ensure control of the correct width of the gap. Control of the uniformity of the width of the gap along the entire weld groove requires a firm attachment of the plates to be welded to a supporting base. In addition to firm support of the plates by the base, tack welding is traditionally used, that is, the plates are bound to one another by short tack welds spaced-apart along the weld groove which requires time-consuming manual work. If tack welding takes place other than at the site proposed for the main weld itself, one has to reserve a work area for this which is as large as that used for the welding process, which means that the welding process as a whole requires twice the working space required if all operations can be done at a single work station.

US-A-4075453 describes a method of butt welding steel plates together edge-to-edge from one side only according to the preamble of claim 1, but uses a steel backing strip below a weld groove provided along the confronting plate edges, which backing strip becomes fused into the weld.

One aim of this invention is to simplify the method for producing a large number of welds of uniform quality and strength, in particular for joining together a series of extremely long metal plates, each being at least 5 mm thick, by butt joint welding in a weld groove from one side only of the plates, and to improve the quality of the welding as well as that of the manufactured assembly.

The aim of the invention is achieved in the manner set out in claim 1. By paying enough attention to the uniformity of the shape of the weld groove over its entire length and to the quality and the smoothness of the surfaces of the weld groove, the entire welding operation may be completed without leaving the traditional gap between the plates, the omitting of which gives the advantage that each of the plates to be welded together gets mutual support from the other plate via the root portion of the weld groove, which facilitates adjustment work and reduces the demands for exact adjustment and prior fixing of the plates. The plates are fixed relative to a bed under the plates by a suction arrangement, the activating and release of which can be quick and simple. For the formation of the edges of the plates which together form the weld groove, form-milling may advantageously be used, but other metal working methods are not ruled out, provided that smooth enough edges with accurate enough shapes can be produced.

It has been found that by utilising a method according to the invention large assemblies of welded extremely long metal plates may be produced at considerably lower cost and more rapidly than by using traditional methods. The obtainable welding speed may, in many cases, be roughly doubled compared with known prior art methods. Also the capital cost of the necessary equipment can be significantly reduced. Savings of the order of about 200,000 US dollars per work site are possible.

The suction fixing device used in a method according to the invention, has to be arranged so that the high temperature generated by the welding does not have a harmful effect on the sealing of the suction fixing device. Desirably, therefore, the part of each suction fixing device which is nearest to the weld groove is spaced at least a distance of 50 mm from the weld groove.

Controlling of the welding process becomes easier, if a root support made of a material of high thermal conductivity, preferably copper, is located under the plates to be welded together, which root support has, immediately under the weld groove, a recess extending in the same direction as the groove to receive welding powder or shielding gas. When steel is being welded, the groove of the root support can be filled with welding powder before fixing the plates in their welding position. When aluminium or stainless steel is to be welded, shielding gas can be led to the recess in the root support. When welding stainless steel it is also possible to use a welding powder, developed for this purpose, but this is rather unusual. The use of a powder or of shielding gas in the manner here discussed has been found to improve the quality of the weld.

The root support may advantageously be cooled, for example, by water or by another fluent coolant. Conveniently, a coolant duct is provided in the root support. The most advantageous solution is usually, that a coolant circulation is arranged in which the temperature of the circulating coolant is monitored and adjusted. By cooling the root support it is possible to obtain a favourable control of the heat stresses caused during the welding.

The root area at the bottom of the weld groove, where the plates to be welded together are in contact with each other, should have a relatively small height, typically between 2 and 4 mm, depending on the thickness of the plates, the lower values, of course, being used for thinner plates and the higher values for thicker plates. When the plate thickness is within the range 5 to 25 mm, it is, however, seldom warranted to use a root height greater than 3 mm. An advantageous shape for the weld groove is the V-shape, in which the angle between the side surfaces of the V is from 50° to 65°, preferably from 55° to 60°. The V-shape is advantageous because it is easy to make. The noted groove angles have been selected for creating the best conditions for successful mass production welding of large assemblies.

When steel is welded, it is very advantageous to use the so-called twin-arc or double wire method, in which two welding wires located close together are brought to the same weld pool through the same contact nozzle, the welding wires receiving current from the same welding power source. The welding wires are preferably brought to the pool in line in the direction of the weld groove. By this welding method the speed of the welding can be raised remarkably so that it approaches the value of 1 metre/minute.

The invention will now be described in greater detail, by way of example, with reference to the accompanying drawings, in which:

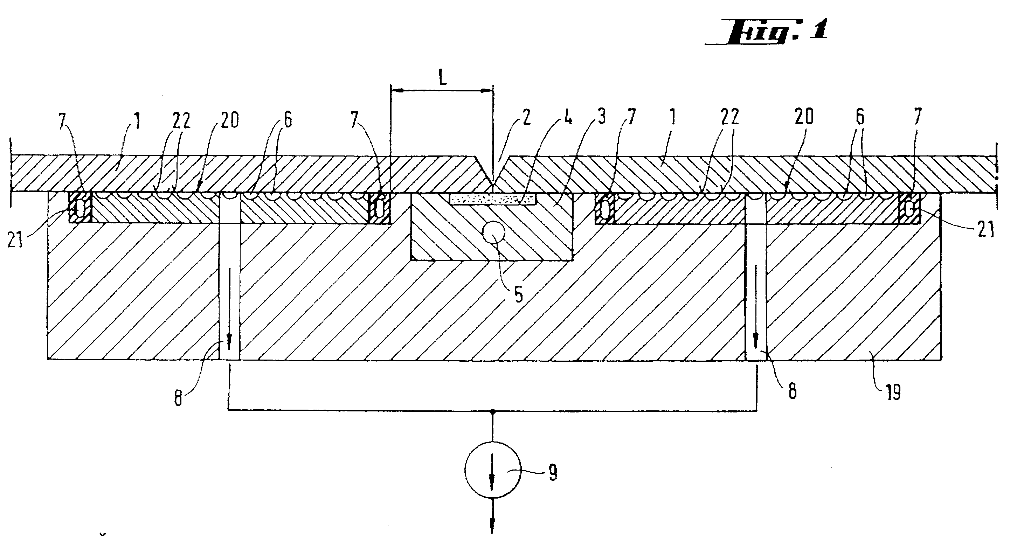

Figure 1 schematically shows in cross-section a welding arrangement intended for operating a welding method according to the invention,
Figure 2 shows a cross-section of a weld groove created for the method of the invention, and
Figure 3 is a schematic perspective view of the application of twin-arc welding to the method according to the invention.

In the drawings, 1 indicates plates to be butt joint welded together from one side, 2 a weld groove provided between the plates 1, 3 a backing to the groove and 4 a recess in the backing extending in the direction of the groove 2. In the backing 3 there is provided a cooling duct 5, through which a fluent coolant, for example water, can be circulated. The backing 3 is made of a material with good thermal conductivity, for example from copper.

The plates 1 are supported in the required relative disposition by means of a suction arrangement including a bed 19 with a rigid (e.g. steel) suction support element 20, provided with suction grooves 6, and edge sealing strips 7 of elastic material. In each sealing strip 7 a duct 21 may be provided, to which pressurised air is led at the beginning of a welding operation in order to improve the air-tightness of the suction fixation element 20. The suction grooves 6 communicate with a vacuum pump 9 via respective suction ducts 8 by means of which a powerful enough partial vacuum is produced when required in the suction grooves 6, to hold the plates 1 in place. The ridges 22 between the suction grooves 6 support each plate 1 in the respective suction fixing area. Suction fixation of plates to be welded is known per se, for example from DE-A-2236936.

At least the sealing strip 7 close to the weld groove 2 must withstand some temperature rise. It is recommended that each strip 7 can withstand a temperature of at least 300°C. In order that the temperature at the seal should not rise too high, it is recommended, that the distance L from the centre line of the weld groove 2 to the nearest sealing strip 7 be at least 50 mm.

The recess 4 in the backing 3 is, during steel welding, filled by a welding powder, but for example when welding aluminium it may be used as a duct, through which a shielding gas can be led under the weld groove. The recess 4 does not have to be deep, a depth of a few millimetres is normally sufficient.

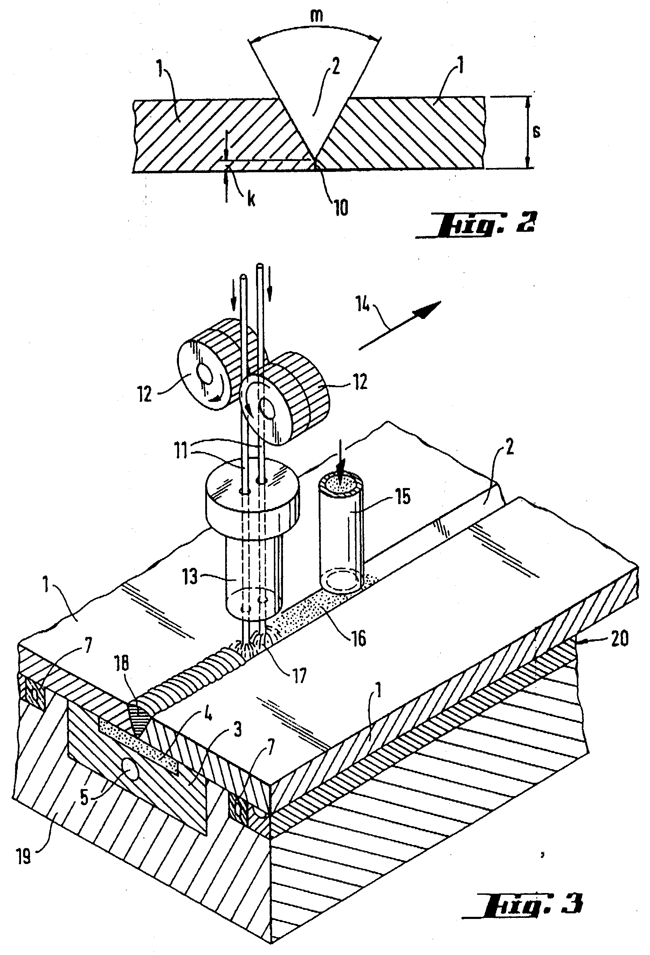

In Figure 2 a preferred shape for the weld groove 2 is shown in greater detail. The groove is V-shaped and its V-angle m is in the range 50° to 65°, preferably 55° to 60°. At the bottom of the groove 2 there is a root part 10, the height k of which is, depending on the thickness of the plates 1 to be welded, between 2 and 4 mm, preferably not more than 3 mm. The plate thickness s is, for steel welding, preferably within the range 5 to 25 mm, but for aluminium welding, the thickness of the plates 1 may be much greater. At the root part 10, the plates support one another, and this makes the relative positioning of the plates 1 easier, because the exact fixing of the plates in a certain position relative to the backing 3 is not important and their position relative to one another is determined by the contact surfaces of the root part 10.

Bevelling the edges of the plates 1 by flame cutting is unlikely to produce edges accurate enough to form an acceptable weld groove 2 and some form of machining (e.g. milling or grinding) will normally be required. Uniformity of shape along the groove is important. At most variations in width (at the widest part of the groove) of 20% and preferably not more than 10% would be tolerable. Generally, the more uniform the edge shaping is, the better the weld quality will be.

Figure 3 shows how two steel plates 1, 1 can be welded together by the method according to the invention by using the so-called twin-arc or double wire arrangement. Two welding wires 11, which are in line one after the other in the elongate direction of the weld groove 2, are fed by means of feed rollers 12 through a contact nozzle 13 to a welding pool 17. The welding advances in the direction of the arrow 14. Welding powder 16 is fed through a pipe 15 to the groove 2 just downstream of the welding pool 17. The parts 11, 12, 13 and 15 move with the same speed in the direction of the arrow 14 along the groove 2. 18 shows the completed weld.

The invention is not limited to the embodiments shown, since several modifications thereof are feasible within the scope of the following claims.

## Claims

1. A method for joining together metal plates (1), each being at least 5mm thick, by butt joint welding in a preformed weld groove (2) from one side only of the plates, the weld groove (2) being formed to extend from said one side through only part of the thickness of the plates and leaving a root area (10) where the plates (1) to be welded together are arranged to receive support from one another without any essential intermediate gap, characterised in that the method is a method for mass producing large plate bodies by joining together extremely long metal plates (1) and comprises forming the weld groove (2) by means of a metal cutting tool, for example by form-milling, with high accuracy with respect to the dimensions and shape of the groove and with a smooth groove surface, engaging the plates (1), in the vicinity of the groove (2) but on the side opposite to said one side, by a bed (19) which includes suction fixing device (6,7,8,9), known per se, to keep the plates (1) to be welded in correct relative disposition, and using the root area (10) of the weld groove (2) as an auxiliary support surface facilitating correct positioning of the long and heavy plates (1) relative to one another.

2. A method according to claim 1, characterised in that the part (7) of each suction fixing device which is nearest to the weld groove (2) is spaced therefrom by (L) at least 50 mm.

3. A method according to claim 1 or 2, characterised in that adjacent to the root area (10) the bed (19) includes a root support (3) of a material with high thermal conductivity, the root support including a recess (14) just under the weld groove (2), for receiving welding powder or shielding gas, which recess extends in the longitudinal direction of the weld groove (2).

4. A method according to claim 3, characterised in that during welding of steel plates (1), the recess (4) of the root support (3) is filled with welding powder before setting the plates (1) in the required position for welding.

5. A method according to claim 3 or 4, characterised in that the root support (3) is cooled by a fluent coolant made to flow in a duct (5) of the root support (3).

6. A method according to any one of claims 1 to 5, characterised in that the height (k) of the root area (10) is in the range 2 to 4 mm, preferably not more than 3 mm.

7. A method according to any one of the preceding claims, characterised in that the weld groove (2) has a V-shape with an angle (m) between the side surfaces in the range 50° to 65°.

8. A method according to any one of claims 1 to 6, characterised in that the weld groove (2) has a V-shape with an angle (m) between the side surfaces in the range 55° to 60°.

9. A method according to any one of the preceding claims, characterised in that when the plates (1) are of steel, welding is effected with two welding wires (11) held close together to enter the same weld pool (17) through the same contact nozzle (13), the welding wires (11) receiving current from the same welding power source.

## Patentansprüche

1. Verfahren zum Zusammenfügen von Metallplatten (1), von denen jede mindestens 5mm dick ist, durch Stumpfstoßschweißen in einer vorgeformten Schweißfuge (2) von nur einer Seite der Platten, welche Schweißfuge (2) so ausgebildet ist, daß sie sich von besagter einen Seite durch nur einen Teil der Dicke der Platten erstreckt, und einen Wurzelbereich (10) beläßt, wo die zu verschweißenden Platten (1) so angeordnet sind , eine gegenseitige Unterstützung ohne einen jeglichen wesentlichen Zwischenraum zu erhalten, dadurch gekennzeichnet, daß das Verfahren ein Verfahren zur Massenfertigung von großen Plattenkörpern durch das Zusammenfügen von extrem langen Metallplatten (1) ist, und die die Schritte umfaßt: Ausbilden der Schweißfuge (2) durch die Hilfe eines Metallschneidwerkzeuges, beispielsweise einer Formfräse, mit großer Genauigkeit bezogen auf die Dimensionen und den Umriß der Fuge und mit einer glatten Fugenoberfläche; Zusammenführen der Platten (1), nächst der Fuge (2), aber auf der zur besagten einen Seite gegenüberliegenden Seite, durch ein Bett (19), das eine an sich bekannte Saug-Befestigungsvorrichtung (6, 7, 8, 9) mit einschließt, um die zu verschweißenden Platten (1) in korrekter relativer Anordnung zu halten, und Verwendung des Wurzelbereichs (10) der Schweißfuge (2) als eine Hilfsunterstützungs-Oberfäche, um die korrekte Positionierung der langen und schweren Platten (1) in gegenseitiger Relation zu erleichtern.

2. Verfahren gemäß dem Anspruch 1,
dadurch gekennzeichnet, daß der Teil (7) jeder Saug-Befestigungsvorrichtung, der nächst zu der Schweißfuge (2) ist, einen Abstand (L) davon mindestens 50 mm hat.

3. Verfahren gemäß dem Anspruch 1 oder 2,
dadurch gekennzeichnet, daß angrenzend an den Wurzelbereich (10) das Bett (19) eine Wurzelunterstützung (3) aus einem Material hoher thermischer Leitfähigkeit aufweist, die Wurzelunterstützung eine Vertiefung (14) gerade unter der Schweißfuge (2) mit einschließt, um ein Schweißpulver oder Schutzgas aufzunehmen, welche Vertiefung sich in der Längsrichtung der Schweißfuge erstreckt.

4. Verfahren gemäß dem Anspruch 3,
dadurch gekennzeichnet, daß während des Schweißens von Stahlplatten (1) die Vertiefung (4) der Wurzelunterstützung (3) mit Schweißpulver gefüllt wird, bevor die Platten (1) in die erforderliche Position zum Schweißen gesetzt werden.

5. Verfahren gemäß dem Anspruch 3 oder 4,
dadurch gekennzeichnet, daß die Wurzelunterstützung (3) durch ein Kühlfluid gekühlt wird, das zum Durchfließen in einem Kanal (5) der Wurzelunterstützung (3) veranlaßt wird.

6. Verfahren gemäß einem der Ansprüche 1 bis 5,
dadurch gekennzeichnet, daß die Höhe (k) des Wurzelbereiches (10) in einem Bereich von 2 bis 4 mm ist, vorzugsweise nicht über 3 mm.

7. Verfahren gemäß einem der vorangehenden Ansprüche,
dadurch gekennzeichnet, daß die Schweißfuge (2) eine V-Gestalt mit einem Winkel (m) zwischen den Oberflächenseiten in einem Bereich von 50° bis 65° hat.

8. Verfahren gemäß einem der Ansprüche 1 bis 6,
dadurch gekennzeichnet, daß die Schweißfuge (2) eine V-Gestalt mit einem Winkel (m) zwischen den Seitenoberflächen in einem Bereich von 55° bis 60° hat.

9. Verfahren gemäß einem der vorangehenden Ansprüche,
dadurch gekennzeichnet, daß wenn die Platten (1) aus Stahl sind, das Schweißen mit zwei Schweißdrähten (11) bewirkt wird, die nahe beieinander gehalten sind, um in denselben Schweißpool (17) durch denselben Kontaktstutzen (13) einzutreten, wobei die Schweißdrähte (11) den Strom aus derselben Schweiß-Spannungsquelle beziehen.

## Revendications

1. Procédé pour lier des plaques métalliques (1), chacune d'entre elles étant au moins épaisse de 5 mm, par soudage bord à bord dans une rainure de soudage (2) réalisée à l'avance, à partir d'un côté seulement des plaques, la rainure de soudage (2) étant réalisée de manière à s'étendre à partir dudit côté à travers une partie seulement de l'épaisseur des plaques et à laisser une zone de base (10) où les plaques (1) à souder sont agencées de façon à s'épauler mutuellement sans aucun intervalle intermédiaire d'importance, caractérisé en ce que ce procédé est un procédé permettant de produire en série des assemblages de plaques de grande taille en liant des plaques métalliques extrêmement longues (1), et qu'il comprend les étapes consistant à réaliser la rainure de soudage (2) au moyen d'un outil à couper les métaux, par exemple par formation au laminoir, avec une grande précision par rapport aux dimensions et à la forme de la rainure et avec une surface de rainure lisse, à fixer les plaques (1), au voisinage de la rainure (2) mais sur le côté opposé audit côté unique, au moyen d'un lit (19) comportant un dispositif de fixation par aspiration (6,7,8,9), connu en soi, pour maintenir les plaques (1) à souder en position relative correcte, et à utiliser la zone de base (10) de la rainure de soudage (2) comme surface de soutien auxiliaire qui facilite la mise en place correcte des longues et lourdes plaques (1) l'une par rapport à l'autre.

2. Procédé selon la revendication 1, caractérisé en ce que la partie (7) de chaque dispositif de fixation par aspiration la plus proche de la rainure de soudage (2) s'en trouve éloignée d'une distance (L) au moins égale à 50 mm.

3. Procédé selon la revendication 1 ou la revendication 2, caractérisé en ce que, tout contre la zone de base (10), le lit (19) comporte un support de base (3) fait d'une matière à haute conductivité thermique, ce support de base comportant un évidement (14) situé juste sous la rainure de soudage (2) et destiné à recevoir de la poudre à souder ou du gaz inerte, cet évidement s'étendant dans la direction longitudinale de la rainure de soudage (2).

4. Procédé selon la revendication 3, caractérisé en ce que durant le soudage de plaques en acier (1), l'évidement (4) du support de base (3) est rempli de poudre à souder avant que l'on ne place les plaques (1) dans la position requise pour le soudage.

5. Procédé selon la revendication 3 ou la revendication 4, caractérisé en ce que le support de base (3) est refroidi par un liquide de refroidissement que l'on fait couler dans un conduit (5) du support de base (3).

6. Procédé selon l'une quelconque des revendications 1 à 5, caractérisé en ce que la hauteur (k) de la zone de base (10) et comprise entre 2 et 4 mm, et de préférence n'est pas supérieure à 3 mm.

7. Procédé selon l'une quelconque des revendications précédentes, caractérisé en ce que la rainure de soudage (2) est en forme de V, avec un angle (m) entre les surfaces latérales compris entre 50° et 65°.

8. Procédé selon l'une quelconque des revendications 1 à 6, caractérisé en ce que la rainure de soudage (2) est en forme de V, avec un angle (m) entre les surfaces latérales compris entre 55° et 60°.

9. Procédé selon l'une quelconque des revendications précédentes, caractérisé en ce que, lorsque les plaques (1) sont en acier, on effectue les soudages à l'aide des deux fils de soudage (11) maintenus proches l'un de l'autre de façon à ce qu'ils entrent dans le même bain de soudure (17) à travers la même tuyère de contact (13), les fils de soudage (11) recevant du courant de la part de la même source électrique de soudage.
